# EUROPEAN PATENT APPLICATION

(11) **EP 4 343 662 A1**
(43) Date of publication of application: **27.03.2024**
(21) Application number: 23180269.5
(22) Date of filing: 20.06.2023
(51) Int. Cl.: G06Q 30/06, G06Q 40/04, G06Q 50/06

(54) **POWER TRANSACTION PROGRAM, POWER TRANSACTION METHOD, AND POWER TRANSACTION APPARATUS**

(30) Priority: 20.09.2022 JP 2022149623
(71) Applicant: FUJITSU LIMITED, Kawasaki-shi, Kanagawa 211-8588 (JP)
(72) Inventor: KOZAKURA, Fumihiko, Kawasaki-shi, Kanagawa 211-8588 (JP)
(74) Representative: Hoffmann Eitle

(57) **Abstract**

A power transaction program comprising instructions which, when executed by a computer, cause the computer to execute processing of storing, in a blockchain, transaction information between a supply side and a demand side of power, the processing including: determining a supply amount by dividing a power resource on the supply side by aggregate period; determining a demand amount of a plurality of customers who demand the power resource on the demand side; determining a surplus power that is a difference between the supply amount and the demand amount; generating, by using zero-knowledge protocol, the transaction information based on the supply amount, the demand amount, to store generated transaction information in the blockchain.

## Description

### FIELD

Embodiments discussed herein are related to a power transaction program, a power transaction method, and a power transaction apparatus.

### BACKGROUND

In recent years, various services using blockchains (BCs) have been developed, and blockchains have been also applied to power transactions. Blockchains are used in various fields such as ledger management of crypto assets owing to openness of transaction histories and difficulty in falsifying the transaction histories.

As techniques using a blockchain technology for power transactions, techniques have been proposed, for example, for managing transactions of supply and demand of renewable energy and avoiding double counting related to power supply and demand. A technique has been also proposed in which zero-knowledge protocols are used in a blockchain to perform non-interactive privacy-preserving verifications of transactions.

Japanese Laid-open Patent Publication Nos. 2020-107202, 2021-135833, 2022-16506, 2018-78702, and 2021-108525, U.S. Patent Application Publication No. 2018/0267597, and Japanese National Publication of International Patent Application No. 2020-512572 are disclosed as related art.

### SUMMARY

### TECHNICAL PROBLEM

In transactions of renewable energy power, a transaction record related to supply and demand of a power resource per certain unit transaction time determined in advance, for example, per 30 minutes is recorded in a blockchain every time. In this case, the amount of data is so enormous that a scale problem occurs such as a heavy processing burden applied on the system. To address this, instead of recording a transaction record per 30 minutes in the blockchain every time, it is conceivable to compile transaction records for a certain period such as one month by using, for example, zero-knowledge protocol, thereby guaranteeing the validity of the transactions per 30 minutes. However, in order to avoid double counting of a power resource in a transaction such, for example, as delivering power more than a power generation amount to a customer, processing per unit transaction time of 30 minutes has to be performed, which imposes a processing burden. For this reason, there is a demand for a new method for all power transactions on a blockchain to reduce the burden on transaction management by, for example, making it unnecessary to manage information per unit transaction time, and also to avoid over-counting.

In one aspect, the present disclosure aims to avoid over-counting related to supply and demand of power resources without recording transaction information on power transactions per unit transaction time in a blockchain.

### SOLUTION TO PROBLEM

According to an aspect of the embodiments, there is provided a power transaction program comprising instructions which, when executed by a computer, cause the computer to execute processing of storing, in a blockchain, transaction information between a supply side and a demand side of power, the processing including: determining a supply amount by dividing a power resource on the supply side by aggregate period; determining a demand amount of a plurality of customers who demand the power resource on the demand side; determining a surplus power that is a difference between the supply amount and the demand amount; generating, by using zero-knowledge protocol, the transaction information based on the supply amount, the demand amount, to store generated transaction information in the blockchain.

### ADVANTAGEOUS EFFECTS OF INVENTION

An aspect of the present disclosure produces an effect of making it is to avoid over-counting of supply and demand of power resources without recording transaction information on power transactions per unit transaction time in a blockchain.

### BRIEF DESCRIPTION OF DRAWINGS

FIG. 1 is an explanatory diagram illustrating an example of a power transaction method according to an embodiment;
FIG. 2 is an explanatory diagram illustrating division of power resources by aggregate period;
FIG. 3 is an explanatory diagram of power tracking record creation according to zero-knowledge protocol;
FIG. 4 is a chart illustrating an example of power supply amount data which is input data for zero-knowledge proof creation;
FIG. 5 is a chart illustrating an example of power demand amount data which is input data for the zero-knowledge proof creation;
FIG. 6 is a chart illustrating an example of surplus power amount data which is input data for the zero-knowledge proof creation;
FIG. 7 is a chart illustrating a data example of matching data which is input data for the zero-knowledge proof creation;
FIG. 8 is a chart illustrating an example of power tracking record data which is output data of the zero-knowledge proof creation;
FIG. 9 is an explanatory diagram of aggregate node creation according to the embodiment;
FIG. 10 is a chart illustrating an example of records for avoiding double counting;
FIG. 11 is an explanatory diagram illustrating flows of data in a power transaction apparatus according to the embodiment;
FIG. 12 is a diagram illustrating a hardware configuration example of the power transaction apparatus;
FIG. 13 is a flowchart illustrating an overall processing example of a power transaction performed by the power transaction apparatus;
FIG. 14 is a flowchart illustrating an example of power resource registration processing;
FIG. 15 is a flowchart illustrating an example of power resource contract processing;
FIG. 16 is a flowchart illustrating an example of aggregation processing on a per-power resource basis;
FIG. 17 is a flowchart illustrating an example of surplus power calculation processing;
FIG. 18 is a flowchart illustrating an example of matching data creation processing;
FIG. 19 is a flowchart illustrating an example of preprocessing for matching data creation;
FIG. 20 is a flowchart illustrating an example of processing of distributing a power generation amount into a demand amount and surplus power;
FIG. 21 is a flowchart illustrating an example of power tracking record creation processing according to zero-knowledge protocol;
FIG. 22 is a sequence diagram of overall power transaction processing;
FIG. 23 is a flowchart illustrating an example of power resource registration processing of a smart contract;
FIG. 24 is a chart illustrating an example of power generator information stored in a blockchain;
FIG. 25 is a flowchart illustrating an example of power resource transfer processing of the smart contract;
FIG. 26 is a chart illustrating an example of transfer information stored in the blockchain;
FIG. 27 is a flowchart illustrating an example of power resource division processing of the smart contract.
FIG. 28 is a flowchart illustrating an example of power tracking information registration processing of the smart contract;
FIG. 29 is a chart illustrating an example of power tracking information stored in the blockchain;
FIG. 30 is a flowchart illustrating an example of power tracking information reference processing of the smart contract;
FIG. 31 is an explanatory diagram of an example of power tracking information output processing for each customer;
FIG. 32 is a flowchart illustrating an example of power tracking information generation processing for each customer; and
FIG. 33 is a flowchart illustrating an example of verification processing by a third party institution.

### DESCRIPTION OF EMBODIMENTS

Hereinafter, embodiments of a computer-readable recording medium storing a power transaction program, a power transaction method, and a power transaction apparatus disclosed herein will be described in detail with reference to the drawings.

### (Example of Power Transaction Method According to Embodiment)

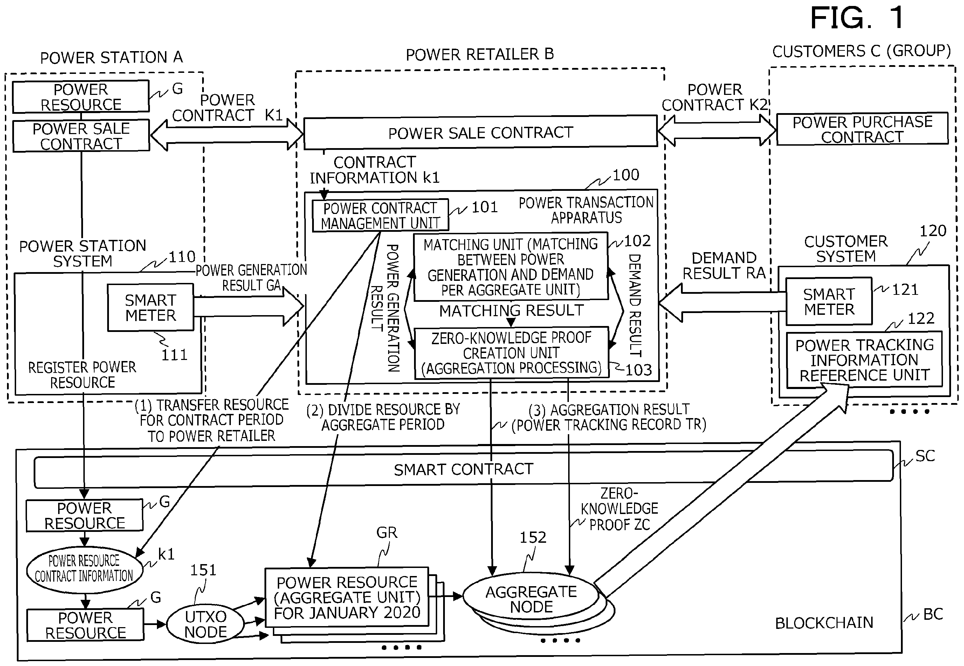

FIG. 1 is an explanatory diagram illustrating an example of a power transaction method according to an embodiment. The power transaction method in the embodiment is implemented by a computer that performs processing for transactions of renewable energy power.

In the power transaction method in the present example, power transactions are performed among a power station A, a power retailer B, and customers C (a group of customers). The power station A makes a power contract K1 to sell all power resources (electricity) G generated by a designated power plant to the power retailer B. Although there are various contracts between the power station A and the power retailer B in fact, the contract is assumed herein to be the contract to sell all the power generation amount. Each of the customers C makes a power contract K2 to purchase demanded power from the power retailer B.

FIG. 1 is a diagram illustrating a configuration example of a power transaction system. The terms and conditions of the power contracts are managed by a power transaction apparatus 100 of the power retailer B. The power transaction apparatus 100 includes a power contract management unit 101, a matching unit 102, and a zero-knowledge proof creation unit 103. A power station system 110 of the power station A, the power transaction apparatus 100 of the power retailer B, and a customer system 120 of the customer C are each allowed to access a blockchain BC. The blockchain BC stores information through processing of a smart contract SC arranged between the blockchain BC and each of the systems.

The power transaction system for power transactions performs the following processing in (1) Step1 to (3) Step3.

### Step 1: the power retailer B stores power resource purchase information

The power station A registers information on a power resource G in the blockchain BC in advance. The power retailer B makes the power contract K1 to receive a transfer of power generated by the power station A. According to this, under the control of the power contract management unit 101, the power transaction apparatus 100 stores, on the blockchain BC, information that a power generation amount of power generated for a contract period is purchased (transferred) as the power resource G. This power resource purchase information preferably carries a signature of the power station A.

In Step1, regarding the contract with the power station A, the power transaction apparatus 100 of the power retailer B records, on the blockchain BC, that part of power resources of the power station A is transferred according to the power contract K1. As a result, the power retailer B is allowed to handle, as their own power resource, the power resource G generated by the power station A.

### (2) Step 2: the power retailer b divides the power resource by aggregate period

The power transaction apparatus 100 of the power retailer B divides information on the power resource G purchased in Step1 by aggregate period into pieces, and stores the divided pieces of information in the blockchain BC. After the transfer of the power resource G is stored in the blockchain BC, the power retailer B divides the power resource G by aggregate period.

Under the control of the power transaction apparatus 100, for example, an unspent transaction output (UTXO) node 151 of the blockchain BC divides the power resource G by aggregate period (for example, one month).

### (3) Step 3: the power retailer B aggregates transaction information on a basis per power resource divided in Step 2

The power transaction apparatus 100 of the power retailer B aggregates the transaction information in the following procedure, and stores power tracking information (a power tracking record TR) as an aggregation result in the blockchain BC.

### Step 3.1: Prepare information for aggregation

The power transaction apparatus 100 collects an actual power generation amount of power and demand amounts of power demanded by all the customers per 30 minutes (referred to as a unit transaction time) in an aggregate period. Each customer requests power equivalent to a demand amount from a power supply side, and consumes the power of the demand amount. In order that "a supply amount = a demand amount" holds per unit transaction time of 30 minutes, the power transaction apparatus 100 defines "surplus power" as a term for receiving surplus power per 30 minutes. The power station system 110 of the power station A is provided with a smart meter 111, which measures a power generation result GA of a power generation amount of power. The customer system 120 of the customer C is provided with a smart meter 121, which measures a demand result RA of a demand amount of power. The customer system 120 is provided with a power tracking information reference unit 122. The power tracking information reference unit 122 accesses the blockchain BC and refers to the power tracking record TR, which is the aggregation result. The power transaction apparatus 100 collects the power generation result GA and the demand result RA of the smart meters 111 and 121 via Route A and the like. It is noted that the "Route A" is a route described in the ITU-T recommendation titled "ITU-T G.9958(03/2018)", as one of three service routes in which the data from smart meters can be communicated.

### Step 3.2: Prepare matching data for the aggregate period

The matching unit 102 of the power transaction apparatus 100 generates matching data on power generation and demand from the data processed in Step 3.1. The matching data is a result of matching between the power generation result GA and the demand result RA (including the surplus power) for each aggregate period (one month). In the example illustrated in FIG. 1, there are no matching elements because only one power resource exists, but multiple power resources presumably exist in usual circumstances. When multiple power resources exist, each customer C has to clarify what amount of the power consumed therein is supplied from the power resource generated by which power station. For this reason, the matching unit 102 of the power transaction apparatus 100 creates the matching data per unit transaction time of 30 minutes.

Step 3.3: Create a power tracking record according to zero-knowledge protocol

The zero-knowledge proof creation unit 103 of the power transaction apparatus 100 creates a power tracking record TR and a zero-knowledge proof ZC based on the data in Steps 3.1 and 3.2 according to zero-knowledge protocol.

### Step 3.4: Store the aggregation result in the blockchain

The power transaction apparatus 100 stores the power tracking record TR and the zero-knowledge proof ZC created in Step 3.3 in the blockchain BC. In this storing, the power transaction apparatus 100 creates a node 152 for supporting the aggregation. This aggregate node 152 is created by using, as inputs, the power resource G, the power tracking record TR, and the zero-knowledge proof ZC for the aggregate period. An output for the aggregate node 152 is unnecessary because all the power resource G is consumed. As a result, the power resource G used in the aggregation is completely consumed, and is not usable in another record.

In the above-described processing for a transaction record per unit transaction time of 30 minutes in order to avoid over-counting such as double counting in power transactions, the power transaction apparatus 100 of the example described above performs power transaction processing of the supply amount versus the sum of the demand amount and the "surplus power". This setting of "the supply amount (power generation result GA) = the demand amount (demand result RA) + the surplus power" makes it unnecessary to manage the remainder of the power resource G.

For example, in transactions of renewable energy for power, managing transaction records per unit transaction time of 30 minutes in a blockchain is burdensome, and the following configuration is conceivable as a configuration for avoiding double counting. For example, in the course of storing transaction records per unit transaction time of 30 minutes in the blockchain, the transaction records are aggregated as a transaction record for a certain period according to the zero-knowledge protocol. The aggregation of valid pieces of input data makes it unnecessary to disclose the transaction records per unit transaction time of 30 minutes, and guarantees the validity of the aggregation result. In this conceivable configuration, the UTXO node of the blockchain manages a power resource that is not allocated yet, thereby avoiding double counting.

In this case, the UTXO node manages part of a power resource allocated to a customer and the remainder of the power resource in a power tracking record that is the aggregation result. It is considered to avoid double counting of a power resource by creating a power tracking record for each customer for an aggregate period, and together with this creating a UTXO node for allocation of the power resource.

This power transaction method involving the UTXO node compiles pieces of transaction information per unit transaction time for each customer by aggregation according to the zero-knowledge protocol, thereby solving the scale problem. However, this method is able to compile only the transaction information but is unable to compile information on power resources to be used to avoid double counting. The technique to solve the scale problem seems to be completed by aggregating not only the pieces of transaction information but also information for avoiding double counting.

As the transaction information, the information compiled by aggregation is usable. Meanwhile, the information for avoiding double counting has to specify a power resource available per unit transaction time of 30 minutes, but when complied, loses the information specifying the power resource. This does not allow the information for avoiding double counting to be compiled by aggregation according to the zero-knowledge protocol in the same way as in the transaction information. For aggregation, it is desired to make power resource management unnecessary by equalizing the total supply amount and the total demand amount of the power resources to each other per unit transaction time of 30 minutes. Since both the supply amount and the demand amount vary over time, a state where "the supply amount = the demand amount" of power per unit transaction time of 30 minutes is established without generating any surplus power is unachievable in fact. For this reason, in the related art, unspent power resources are not aggregated, but are managed by UTXO (extended UTXO method).

To address the above problem in the related art, the embodiment makes it unnecessary to manage information on the power resource G per unit transaction time of 30 minutes by generating no surplus power in order to enable aggregation of information for avoiding double counting as described above. The UTXO node 151 illustrated in FIG. 1 according to the embodiment has a configuration of dividing information on power resources G by aggregate period (for example, one month), which is different from a configuration in which the UTXO node manages unspent power resources G without aggregation by the extended UTXO method described above.

The smart contract SC illustrated in FIG. 1 has the following lists, according to which program processing for each of the aforementioned functions on the blockchain BC such as information registration, processing, and reference is performed based on parameters.

### 1. Power Resource Registration

Function: register a power resource on the blockchain BC.
Parameters: power station A (power generator owner) and power generator identifier

### 2. Power Resource Transfer

Function: transfer the right of power generated by the power generator for a transfer period from the power station A (power generator owner)
Parameters: power generator identifier, the transfer period, and the transfer destination

### 3. Power Resource Division

Function: divide resources on the power generator on a per-aggregate period basis
Parameters: power resource and aggregate period

### 4. Power Tracking Information Registration

Function: Register a power tracking record TR
Parameters: power resource (aggregate period), power tracking record group (aggregation result) TR, and zero-knowledge proof ZC

### 5. Power Tracking Information Reference

Function: Refer to the power tracking record TR
Parameter: aggregate period

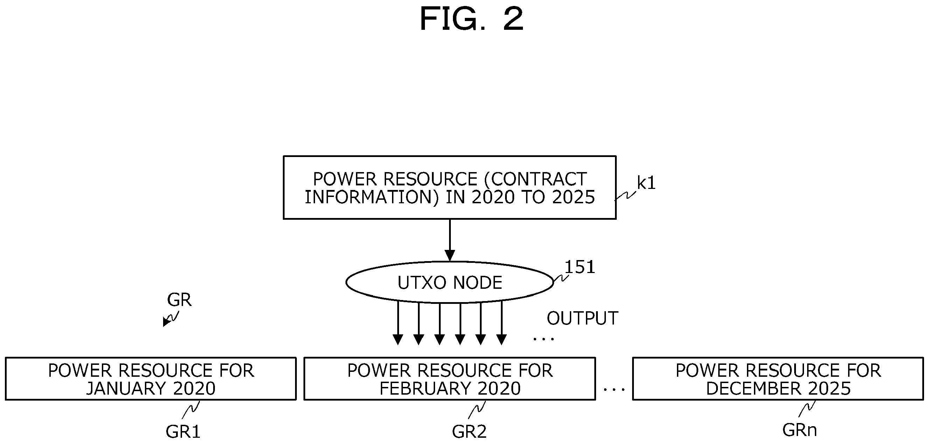

FIG. 2 is an explanatory diagram illustrating division of the power resources by aggregate period. A processing example in Step 2 described above will be described. In the example illustrated in FIG. 2, power resource contract information k1 on power resources G according to the power contract K1 (the power resources G in 2020 to 2025) is input to the UTXO node 151. The UTXO node 151 outputs power resources "January 2020" GR1, "February 2020" GR2, ..., and "December 2025" GRn divided on a monthly basis. Each of the power resources GR (GR1 to GRn) thus divided only contains description of the right to use the power resource G generated in the specified period, and does not contain any description of information on an actual power generation amount and so on.

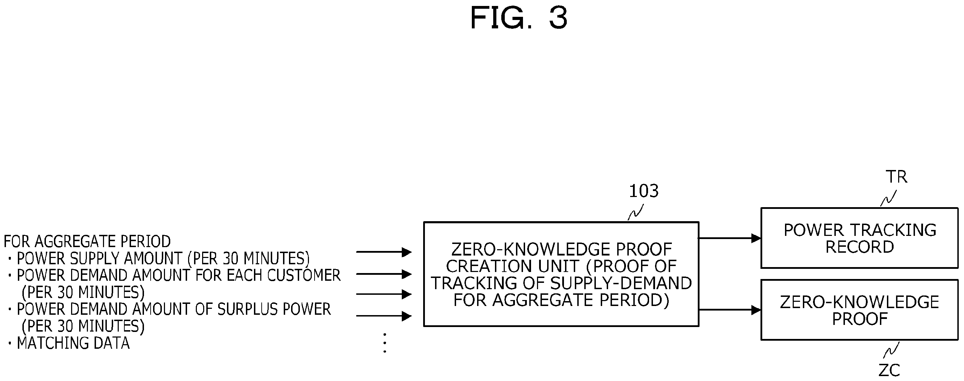

FIG. 3 is an explanatory diagram of power tracking record creation according to zero-knowledge protocol. A processing example in Step 3.3 described above will be described. The zero-knowledge proof creation unit 103 receives inputs for an aggregate period such as the power supply amount (power generation result GA), the power demand amount (demand result RA) for each customer C, the power demand amount remaining as surplus power, and the matching data created in Step 3.2. All of the power supply amount, the power demand amount for each customer C, and the power demand amount remaining as the surplus power for the aggregate period are data per unit transaction time of 30 minutes.

The zero-knowledge proof creation unit 103 creates a power tracking record TR by aggregating the input data according to the zero-knowledge protocol. The zero-knowledge protocol enables the power tracking record TR to be proved to be tracking of the supply and demand for the aggregate period. The zero-knowledge proof creation unit 103 outputs the power tracking record TR as an aggregation result, and a zero-knowledge proof ZC. The power tracking record TR does not hold the transaction information per unit transaction time of 30 minutes, but is proved to be information created with the transaction information per unit transaction time of 30 minutes aggregated on a monthly basis.

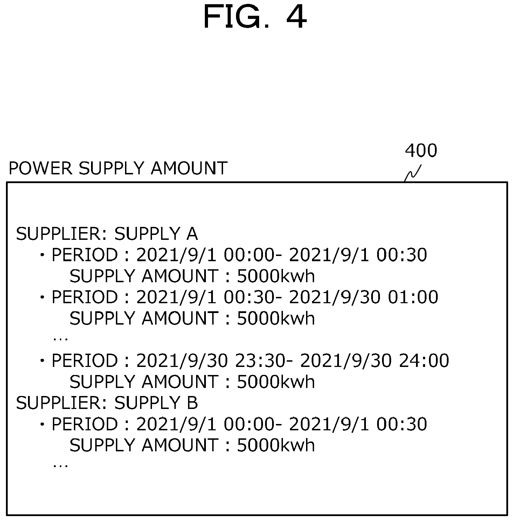

Examples of data used in the zero-knowledge protocol will be described with reference to FIGs. 4 to 8. For example, these kinds of data are stored in a storage unit such as a memory of the power transaction apparatus 100, and are input and output by the zero-knowledge proof creation unit 103.

FIG. 4 is a chart illustrating an example of power supply amount data which is input data for zero-knowledge proof creation. Power supply amount (power generation result GA) data 400, which is input data to the zero-knowledge proof creation unit 103, contains information for each power supplier (power station A) specifying periods per unit transaction time of 30 minutes and a power supply amount for each of the periods per unit transaction time.

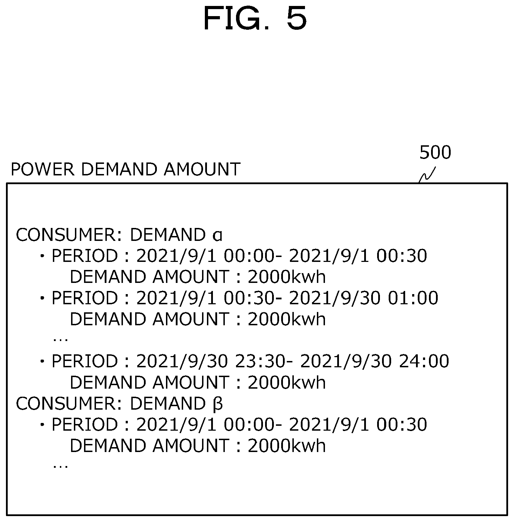

FIG. 5 is a chart illustrating an example of power demand amount data which is input data for the zero-knowledge proof creation. Power demand amount (demand result RA) data 500 contains information for each power customer C specifying power supply reception (demand) periods per unit transaction time of 30 minutes, and a demand amount for each of the periods per unit transaction time.

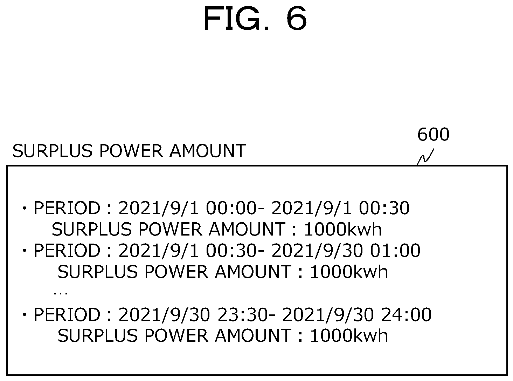

FIG. 6 is a chart illustrating an example of surplus power amount data which is input data for the zero-knowledge proof creation. Surplus power amount data 600, which is input data to the zero-knowledge proof creation unit 103, contains information specifying periods per unit transaction time of 30 minutes, and a surplus power amount for each of the periods per unit transaction time. The surplus power is equivalent to a difference between a power supply amount and a power demand amount per unit transaction time in a relationship between a supplier and a consumer of power specified in the matching data.

A specific example of the relationship among the power supply amount, the power demand amount, and the surplus power amount per unit transaction time illustrated in FIGs. 4 to 6 will be described. For example, for 30 minutes in a period per unit transaction time of "2021/9/1 00:00 to 2021/9/1 00:30", the power supply amount of the power station A on a supplier side in FIG. 4 is "5000 kWh", whereas the power demand amount of each of two customers α and β on a demand side in FIG. 5 is "2000 kWh". In this case, as illustrated in FIG. 6, the surplus power amount in the period per unit transaction time is calculated as 5000 - (2000 + 2000) = 1000 kWh.

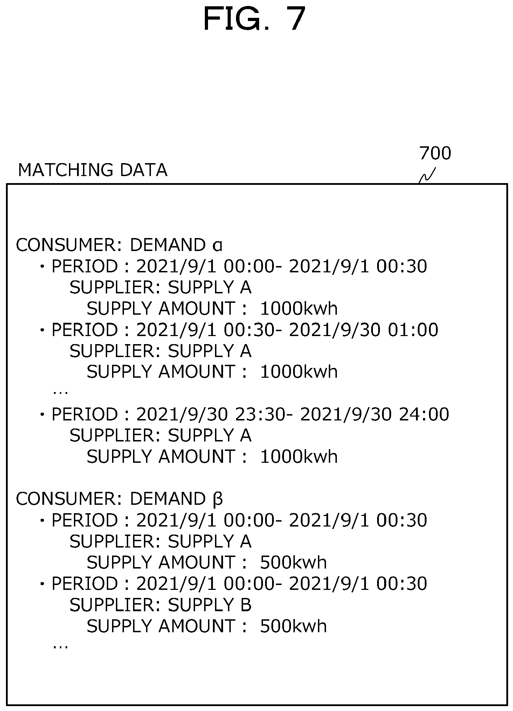

FIG. 7 is a chart illustrating a data example of matching data which is input data for the zero-knowledge proof creation. The matching data is generated and output by the matching unit 102. Matching data 700, which is input data to the zero-knowledge proof creation unit 103, contains information for each power consumer specifying a power supplier (power station A) per unit transaction time of 30 minutes and a power supply amount (demand amount) for each period per unit transaction time. The matching data contains, for each customer C, link information of the demand amount and its supplier per unit transaction time of 30 minutes, and is created in a state where no excess and deficiency between the supply and the demand occurs per unit transaction time.

In the example illustrated in FIG. 7, for 30 minutes in a period per unit transaction time of "2021/9/1 00:00 to 2021/9/1 00:30", a power supplier to the customer α is only a supply A (power station A), whereas power suppliers to the customer β are two power stations (supplies A and B) and the customer β receives 500 kWh supplied from each of the supplies A and B.

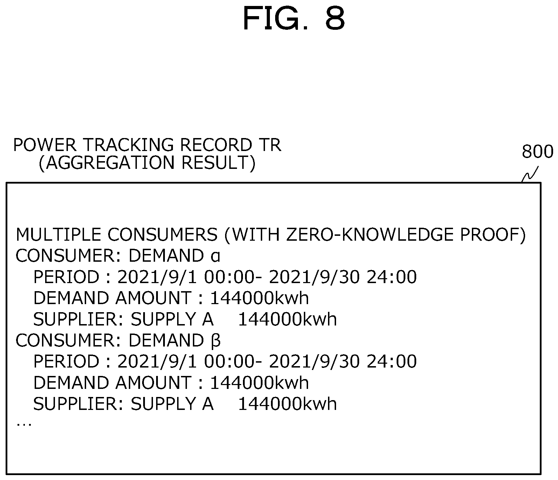

FIG. 8 is a chart illustrating an example of power tracking record data which is output data of the zero-knowledge proof creation. Power tracking record TR data 800 is an aggregation result according to the zero-knowledge protocol by the zero-knowledge proof creation unit 103, and is information in which pieces of transaction information per unit transaction time of 30 minutes are compiled for each aggregate period. The power tracking record TR data 800 illustrated in FIG. 8 contains information for each consumer (customer C) specifying the power demand amount, the supplier (power station A), and the supply amount for the aggregate period (one month).

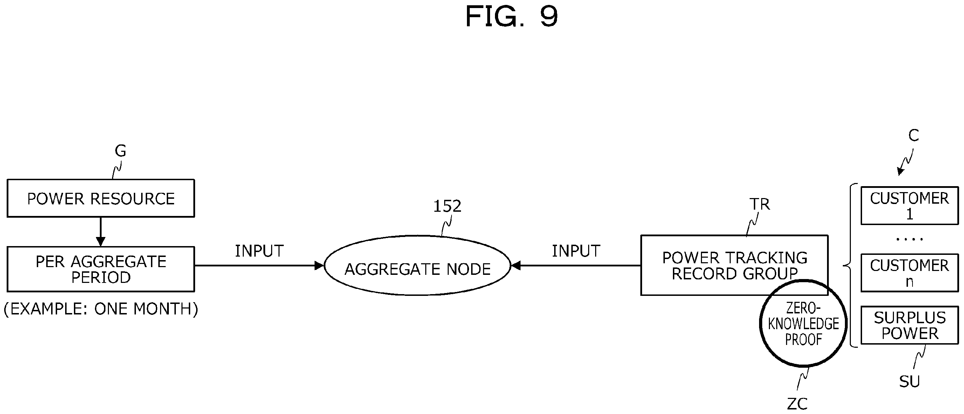

FIG. 9 is an explanatory diagram of aggregate node creation according to the embodiment. As illustrated in FIG. 9, the power transaction apparatus 100 in the embodiment creates the aggregate node 152 by dividing the power resource G on the power station A side by aggregate period, while grouping multiple customers C (a group of customers 1 to n) and adding "surplus power" SU thereto on the customer C side.

The power transaction apparatus 100 in the embodiment is enabled to adjust the demand amount by using the method of adding the "surplus power" SU to the demand amount. Providing the surplus power SU as an imbalance receiver on the customer C side makes it possible to record so-called balancing transactions in the blockchain in which "the supply amount = the demand amount" per unit transaction time of 30 minutes holds, and thereby consume all the supply amount. As a result, the aggregation according to the zero-knowledge protocol of the power transaction apparatus 100 makes it possible to consume the supply amount per unit transaction time unit of 30 minutes without excess or deficiency, so that no surplus power resource remains. According to the embodiment, the UTXO node 151 does not have to perform the power resource management for avoiding double counting.

In the processing performed by the power transaction apparatus 100, first, the power resource G of the supply amount is divided by aggregate period into power resources in a completely consumable size. Surplus power may occur due to an excessive supply amount. For the purpose of complete consumption, the power retailer b prepares the "surplus power" SU for receiving the surplus in place of the customers, and receives the surplus to make all the supply amount appear to be consumed.

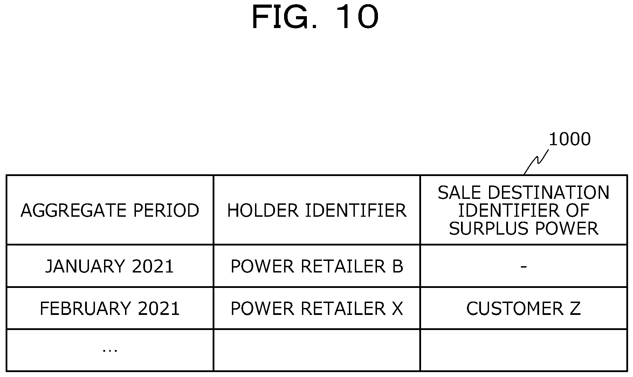

FIG. 10 is a chart illustrating an example of records for avoiding double counting. For example, regarding power received as the "surplus power" SU, its information per unit transaction time of 30 minutes is lost as a result of aggregation, but the power retailer B is allowed to separately sell the power as a renewable energy value for the aggregate period. In this case, as illustrated in FIG. 10, a sale destination (resale destination) of the surplus power SU for the aggregate period is clearly specified in the blockchain, so that the management for avoiding double counting may be achieved.

As illustrated in FIG. 10, in information 1000 held by the aggregate node 152, a holder identifier (power retailer) and a sale destination identifier (a customer) of surplus power are associated with each other for each aggregate period. In the example in FIG. 10, for an aggregate period of "February 2021", the holder identifier is "power retailer X", and the sale destination identifier of the surplus power is "customer Z". For example, it is clearly specified that the customer Z usually performs a power transaction with the power retailer B, but makes a transaction with the different "power retailer X" in February 2021.

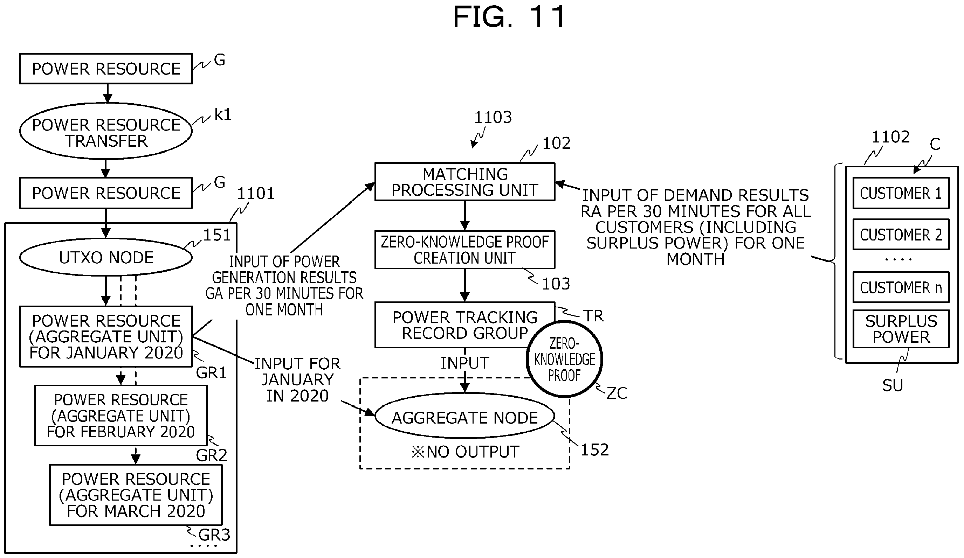

FIG. 11 is an explanatory diagram illustrating flows of data in the power transaction apparatus according to the embodiment. FIG. 11 illustrates main data processing extracted from the system illustrated in FIG. 1. In processing of a left frame 1101 in FIG. 11, the power resource G is divided in advance. In processing of a right frame 1102, the customers C are grouped including the surplus power SU. In processing of a central portion 1103, the power tracking is managed by combining the power resource G divided in advance and the grouped customers C including the surplus power SU. This management is able to avoid double counting without managing the power resource per unit transaction time unit of 30 minutes.

### (Hardware Configuration Example of Power Transaction Apparatus)

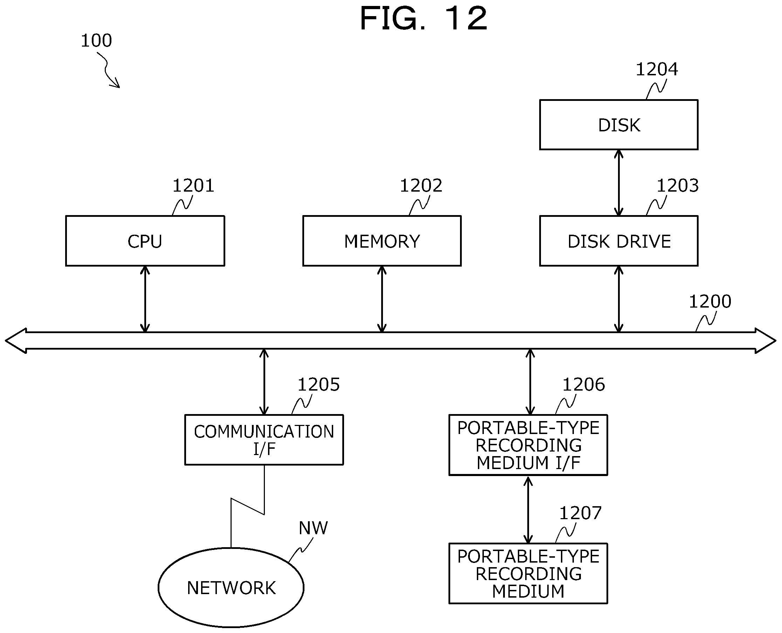

FIG. 12 is a diagram illustrating a hardware configuration example of the power transaction apparatus. A power transaction apparatus 100 may be configured by a computer including general-purpose hardware illustrated in FIG. 12. The power transaction apparatus 100 may be configured by a cloud, for example, a server group on a network NW.

The power transaction apparatus 100 includes a central processing unit (CPU) 1201, a memory 1202, a disk drive 1203, and a disk 1204. The power transaction apparatus 100 includes a communication interface (I/F) 1205, a portable -type recording medium I/F 1206, and a portable-type recording medium 1207. These components are coupled to one another through a bus 1200.

The CPU 1201 functions as a control unit that controls the entire power transaction apparatus 100. The CPU 1201 may include multiple cores. The memory 1202 includes, for example, a read-only memory (ROM), a random-access memory (RAM), a flash ROM, and the like. For example, the flash ROM stores a program of an operating system (OS), the ROM stores application programs, and the RAM is used as a work area of the CPU 1201. The programs stored in the memory 1202 are loaded into the CPU 1201, thereby causing the CPU 1201 to execute the coded processing.

The disk drive 1203 controls reading and writing of data from and to the disk 1204 in accordance with the control of the CPU 1201. The disk 1204 stores data written under the control of the disk drive 1203. Examples of the disk 1204 include a magnetic disk, an optical disk, and the like.

The communication I/F 1205 is coupled to a network NW through a communication line, and is coupled to an external computer and the smart contract SC of the blockchain BC through the network NW. Examples of the external computer include the power station system 110 and the customer system 120 illustrated in FIG. 1. The communication I/F 1205 functions as an interface between the network NW and the inside of the apparatus, and controls input and output of data from and to the external computers. For example, a modem, a LAN adapter, or the like may be employed as the communication I/F 1205.

The portable-type recording medium I/F 1206 controls reading and writing of data from and to a portable-type recording medium 1207 in accordance with the control of the CPU 1201. The portable-type recording medium 1207 stores data written under the control of the portable-type recording medium I/F 1206. Examples of the portable-type recording medium 1207 include a compact disc (CD)-ROM, a Digital Versatile Disk (DVD), a Universal Serial Bus (USB) memory, and the like. The CPU 1201 illustrated in FIG. 12 performs the processing by the power transaction apparatus 100 illustrated in FIG. 1.

The power station system 110, the customer system 120, and the smart contract SC illustrated in FIG. 1 may have the same hardware configuration as that illustrated in FIG. 12. The power transaction apparatus 100 may have the functions of the smart contract SC. For the smart contract SC, a hardware configuration equivalent to that in FIG. 12 may be implemented by a cloud.

### (Processing Examples of Embodiment)

Next, processing examples of the power transaction apparatus 100 and the systems according to the embodiment will be described. Each of the power transaction apparatus 100, the power station system 110, and the customer system 120 involved in the power transactions illustrated in FIG. 1 temporarily holds processed information (data) in the system itself and stores the processed information in the blockchain BC. In each kind of the processing described below, "storing" means storing in the blockchain BC.

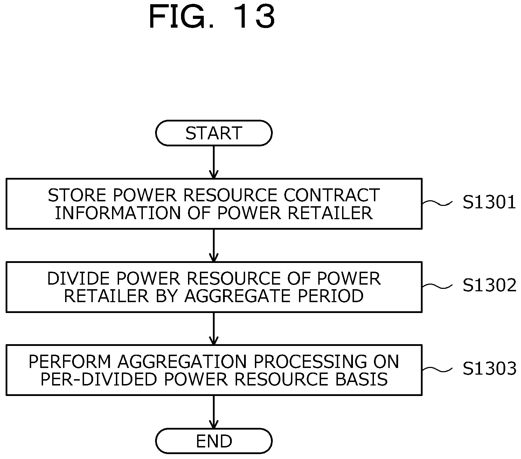

FIG. 13 is a flowchart illustrating an overall processing example of a power transaction performed by the power transaction apparatus. First, the power transaction apparatus 100 stores power resource contract information k1 of the power retailer B (step S1301). Next, the power transaction apparatus 100 divides the power resource G of the power retailer B by aggregate period (step S1302). The power transaction apparatus 100 performs aggregation processing on a per-divided power resource basis (step S1303), and ends this processing. This aggregation result is a power tracking record TR, for example, on a monthly basis.

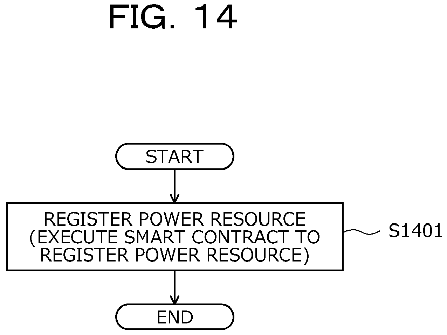

FIG. 14 is a flowchart illustrating an example of power resource registration processing. The power station A registers the power resource G from the power station system 110 (step S1401), and ends the processing. In this processing, the power station system 110 executes the smart contract SC and registers the power resource G in the blockchain BC.

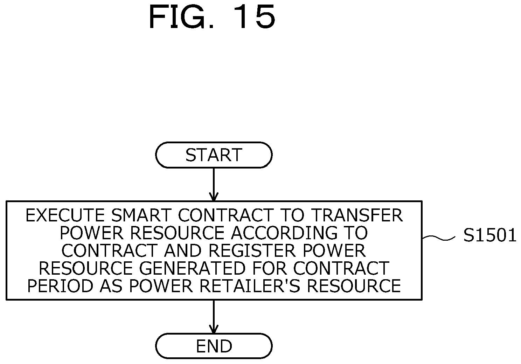

FIG. 15 is a flowchart illustrating an example of power resource contract processing. The power retailer B stores information that a power generation amount of power generated for a contract period is purchased as the power resource G according to the power resource contract information k1 in the power contract K1 to receive a transfer of power generated by the power station A. The power transaction apparatus 100 of the power retailer B executes the smart contract SC to transfer the power resource according to the power resource contract information k1, thereby registers the power resource G generated for the contract period as its own power resource (step S1501), and ends the processing.

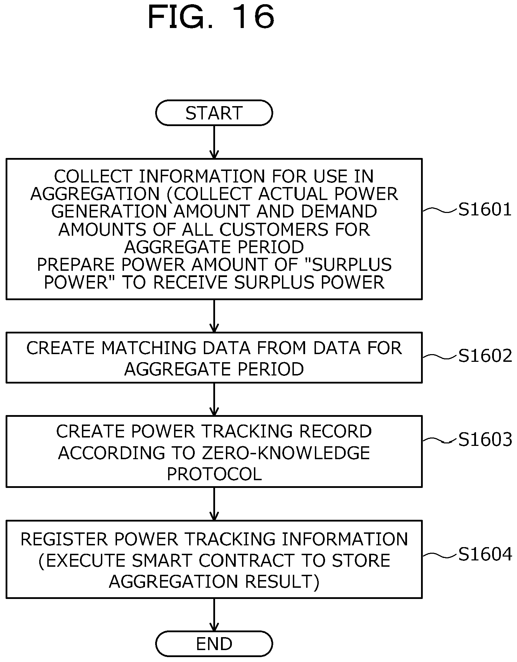

FIG. 16 is a flowchart illustrating an example of aggregation processing on a per-power resource basis. The power transaction apparatus 100 of the power retailer B collects information to be used in aggregation (step S1601). The power transaction apparatus 100 collects the actual power generation amount (power generation result GA) of the power station A and the demand amounts (demand results RA) of all the customers C for the aggregate period (one month). The power transaction apparatus 100 prepares a power amount of "surplus power" SU for receiving surplus power.

Next, the power transaction apparatus 100 creates matching data from the data for the aggregate period (step S1602). Then, the power transaction apparatus 100 creates a power tracking record TR in accordance with the zero-knowledge protocol (step S1603). Subsequently, the power transaction apparatus 100 registers the created power tracking record TR (step S1604), and ends this processing. The power transaction apparatus 100 executes the smart contract SC, and thereby stores the power tracking record TR, which is the aggregation result, in the blockchain BC.

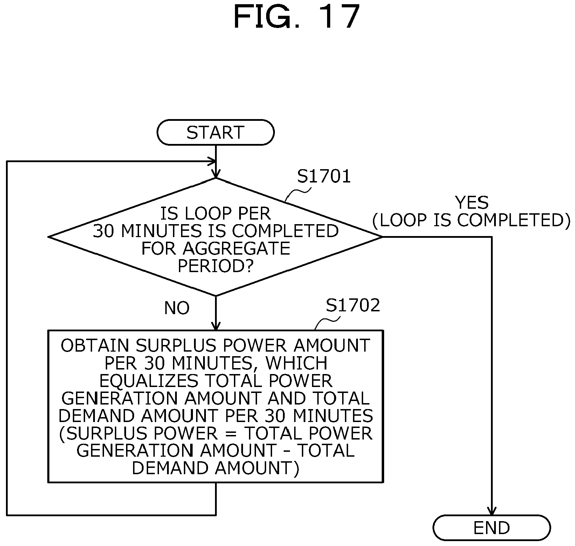

FIG. 17 is a flowchart illustrating an example of surplus power calculation processing. The processing in FIG. 17 is an example of processing of calculating the surplus power SU illustrated in step S1601 in FIG. 16. The power transaction apparatus 100 determines whether or not loop processing per unit transaction time (per 30 minutes) is completed for the aggregate period (one month) (step S1701). If the loop processing per unit transaction time is not completed for the aggregate period (step S1701: No), the power transaction apparatus 100 obtains the surplus power amount per unit transaction time (per 30 minutes) such that the total power generation amount and the total demand amount per unit transaction time are equal to each other (step S1702).

For example, the power transaction apparatus 100 obtains the surplus power amount in accordance with a calculation formula: the surplus power = the total power generation amount - the total demand amount. The total power generation amount is assumed herein to be equal to or larger than the total demand amount.

After the processing in step S1702, the power transaction apparatus 100 returns to the processing in step S1701. If the loop processing per unit transaction time (per 30 minutes) is completed for the aggregate period in step S1701 (step S1701: Yes), the power transaction apparatus 100 ends this processing.

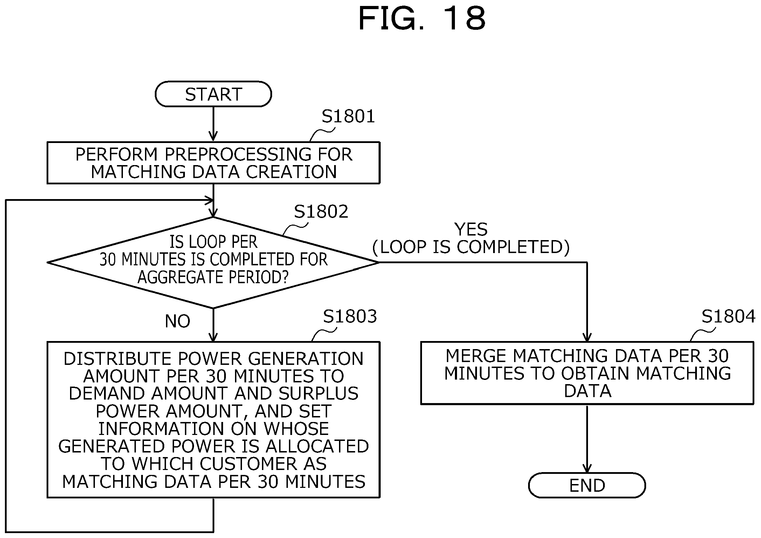

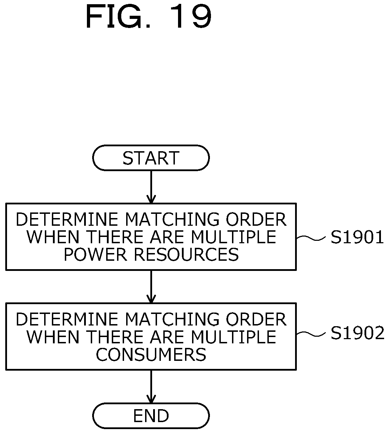

FIG. 18 is a flowchart illustrating an example of matching data creation processing. The processing in FIG. 18 is an example of the matching data creation processing illustrated in step S1602 in FIG. 16. The power transaction apparatus 100 performs preprocessing for matching data creation (step S1801, see FIG. 19). After that, the power transaction apparatus 100 determines whether or not the loop processing per unit transaction time (per 30 minutes) is completed for the aggregate period (one month) (step S1802).

If the loop processing per unit transaction time is not completed for the aggregate period (step S1802: No), the power transaction apparatus 100 distributes the power generation amount per unit transaction time (per 30 minutes) into the demand amount and the surplus power. The power transaction apparatus 100 creates, as matching data per unit transaction time (per 30 minutes), information on whose generated power is allocated to which place (step S1803). In this step, all the power generation amount is allocated because the power generation amount = the demand amount + the surplus power amount holds. After that, the power transaction apparatus 100 returns to the processing in step S1802.

If the loop processing per unit transaction time (per 30 minutes) is completed for the aggregate period in the processing in step S1802 (step S1802: Yes), the power transaction apparatus 100 performs processing in step S1804. In step S1804, the power transaction apparatus 100 creates matching data by merging the matching data per unit transaction time (per 30 minutes) (step S1804). The power transaction apparatus 100 ends this processing.

FIG. 19 is a flowchart illustrating an example of preprocessing for matching data creation. The processing illustrated in FIG. 19 is an example of the preprocessing for matching data creation illustrated in step S1801 in FIG. 18. When there are multiple power stations (power resources), the power transaction apparatus 100 determines a matching order as the preprocessing (step S1901). After that, when there are multiple customers, the power transaction apparatus 100 determines a matching order (step S1902). These orders on the supply side and the demand side may be determined by, for example, sorting of the identifiers of the power stations A and the customers C. The power transaction apparatus 100 ends this processing.

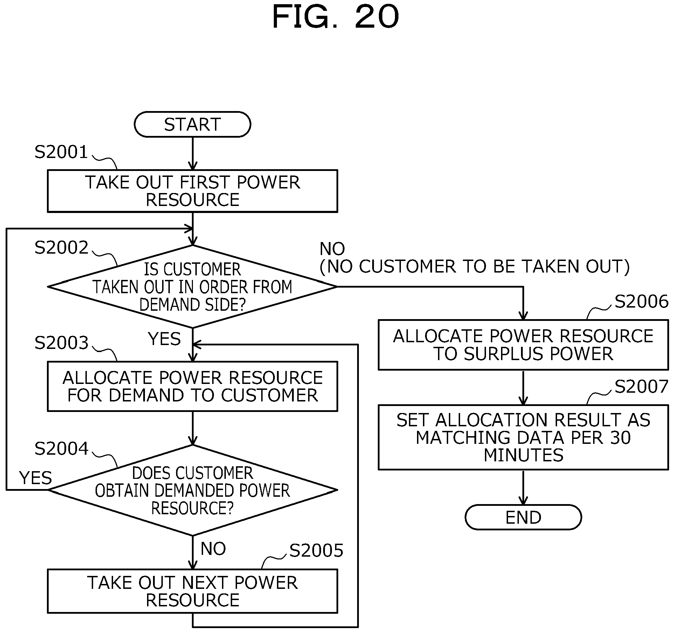

FIG. 20 is a flowchart illustrating an example of processing of distributing the power generation amount into the demand amount and the surplus power. The processing illustrated in FIG. 20 is an example of the distribution processing in step S1803 in FIG. 18. The power transaction apparatus 100 takes out a first power resource G in the matching order (step S2001). Next, the power transaction apparatus 100 takes out a customer C in the matching order on the demand side (step S2002). The power transaction apparatus 100 proceeds to processing in step S2003 when there is a customer C to be taken out (step S2002: Yes), or proceeds to processing in step S2006 when there is no customer C to be taken out (step S2002: No).

In step S2003, the power transaction apparatus 100 allocates the power resource G for a demand to the customer C (step S2003). Next, the power transaction apparatus 100 determines whether or not the customer C obtains the power resource G sufficient for the demand (step S2004). If the customer C obtains the power resource G sufficient for the demand (step S2004: Yes), the power transaction apparatus 100 returns to the processing in step S2002. On the other hand, if the customer C does not obtain the power resource G sufficient for the demand (step S2004: No), the power transaction apparatus 100 takes out the next power resource G (step S2005), and returns to the processing in step S2003.

In step S2006, the power transaction apparatus 100 allocates the power resource G to the surplus power (step S2006). After that, the power transaction apparatus 100 sets the allocation result as matching data per unit transaction time (per 30 minutes) (step S2007), and ends this processing.

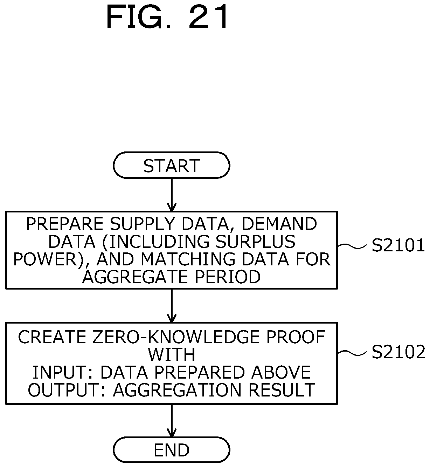

FIG. 21 is a flowchart illustrating an example of power tracking record creation processing according to zero-knowledge protocol. The processing illustrated in FIG. 21 is an example of the zero-knowledge protocol processing illustrated in step S1603 in FIG. 16. The power transaction apparatus 100 prepares data on the supply amount and the demand amount (including the surplus power) and the matching data (step S2007 in FIG. 20) for the aggregate period (one month) (step S2101).

The power transaction apparatus 100 creates a zero-knowledge proof by setting, as inputs, the data on the supply amount and the demand amount (including the surplus power) and the matching data for the aggregate period prepared in step S2101 and setting an aggregation result (power tracking record TR) as an output (step S2102). The power transaction apparatus 100 ends this processing.

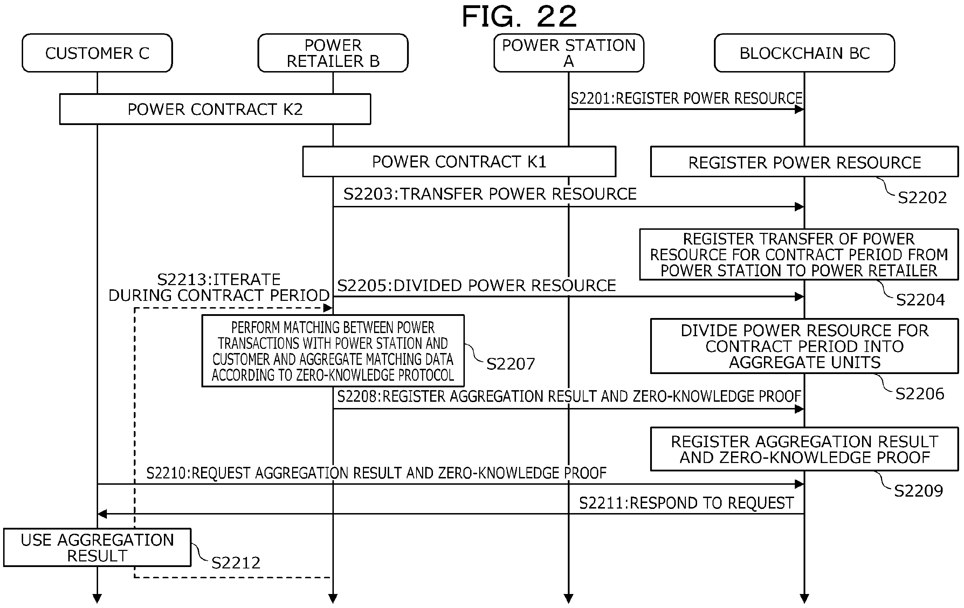

FIG. 22 is a sequence diagram of overall power transaction processing. FIG. 22 illustrates flows of data among the power station A, the power retailer B, the customer C, and the blockchain BC in the entire system described above. In the following processing, according to FIG. 1, the power retailer B performs power transaction processing with the power transaction apparatus 100. The power station A performs power transaction processing with the power station system 110. The customer C performs power transaction processing with the customer system 120.

The power station A performs processing of registering a power resource G in the blockchain BC (step S2201). The blockchain BC registers the power resource G of the power station A (step S2202).

The power retailer B makes a power contract K2 for power transactions with the customer C. The power retailer B makes a power contract K1 for power transactions with the power station A. In the blockchain BC, the power retailer B registers information that the power retailer B receives a transfer of the power resource G from the power station A based on the power contract K1 (power resource contract information k1) (step S2203). The blockchain BC registers the transfer of the power resource G for a contract period from the power station A to the power retailer B (step S2204).

Next, the power retailer B divides the power resource G (step S2205). The power retailer B divides the power resource G for the contract period into aggregate units on the blockchain BC (step S2206).

Next, the power retailer B matches the power transactions with the power station A and the customer C, and aggregates the matching data according to the zero-knowledge protocol (step S2207). The power retailer B registers the aggregation result (power tracking record TR) and the zero-knowledge proof ZC in the blockchain BC (step S2208). The blockchain BC registers the aggregation result (power tracking record TR) and the zero-knowledge proof ZC (step S2209).

At a certain timing after that, the customer C requests the aggregation result and the zero-knowledge proof from the blockchain BC (step S2210). The blockchain BC sends a response to the request to the customer C (step S2211). With the response from the blockchain BC, the customer C is allowed to use the aggregation result of the power transactions (step S2212).

The customer C may request the aggregation result and the zero-knowledge proof as illustrated in step S2210 repeatedly during the contract period. Every time the customer C requests the aggregation result and the zero-knowledge proof, the power retailer B performs the processing in step S2207 and the following steps, and makes a response to each request (step S2213).

### (Processing Examples of Smart Contract)

Next, description will be given of processing examples of the smart contract SC of the blockchain BC that cooperates with the power transaction system described above.

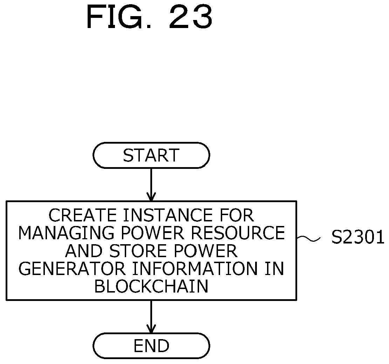

FIG. 23 is a flowchart illustrating an example of power resource registration processing of the smart contract. When the power station A registers the power resource G, the smart contract SC creates an instance for managing the power resource G, stores power generator information such as parameters in the blockchain BC (step S2301), and ends this processing.

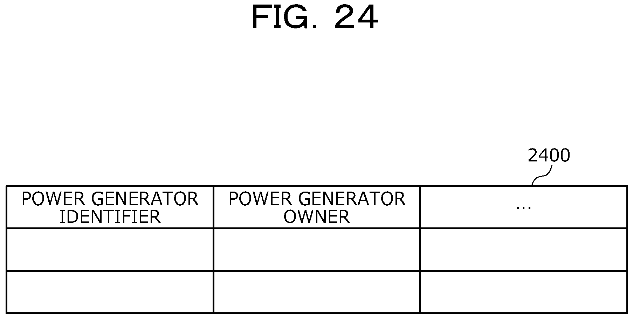

FIG. 24 is a chart illustrating an example of power generator information stored in the blockchain. Power generator information 2400 created in the processing in FIG. 23 contains information on a power generator identifier, a power generator owner, and so on of the power station A.

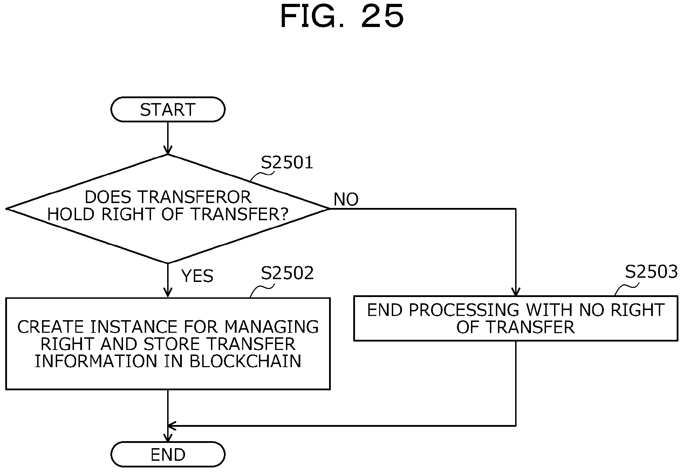

FIG. 25 is a flowchart illustrating an example of power resource transfer processing of the smart contract. Based on the power contract K1 (power resource contract information k1) between the power retailer B and the power station A, the smart contract SC determines whether or not the transferor (the power retailer B) holds the right of transfer (step S2501). If whether or not the transferor has the right of transfer is not registered, the smart contract SC determines whether the power generator owner holds the right of transfer. The smart contract SC proceeds to processing in step S2502 when the transferor holds the right of transfer (step S2501: Yes), or proceeds to processing in step S2503 when the transferor does not hold the right of transfer (step S2501: No).

In step S2502, the smart contract SC creates an instance for managing the right, stores transfer information such as parameters in the blockchain BC (step S2502), and ends this processing. As the information on a provider, a right identifier is stored in the case of the transfer from the right holder, and a power generator identifier is stored in the case where there is no right information yet.

It step S2503, the smart contract SC ends this processing because there is no right of transfer (step S2503).

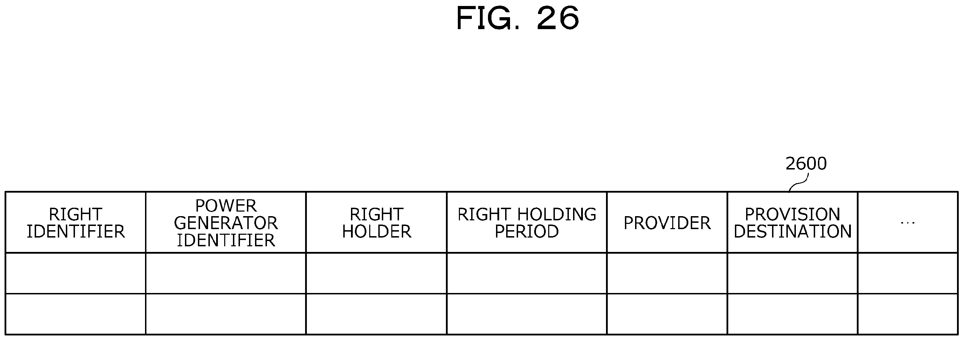

FIG. 26 is a chart illustrating an example of transfer information stored in the blockchain. Transfer information 2600 created in the processing in FIG. 25 contains information on a right identifier of a power generator, a power generator identifier, a right holder, a right holding period, a provider, a provision destination, and so on.

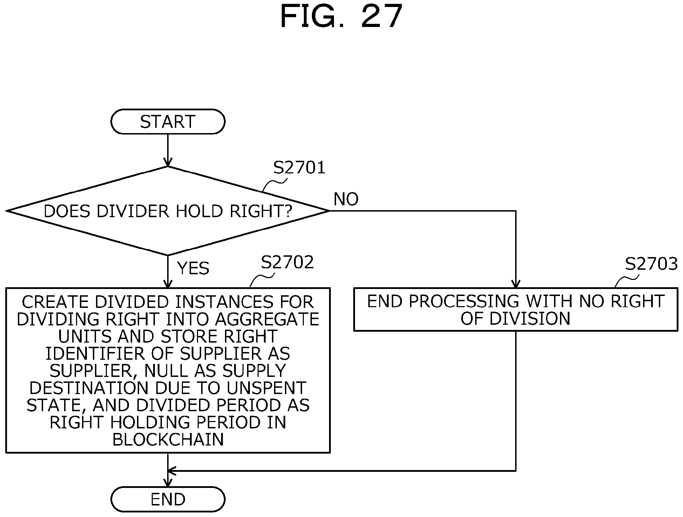

FIG. 27 is a flowchart illustrating an example of power resource division processing of the smart contract. In dividing the power resource into the aggregate units, the smart contract SC determines whether or not the divider (the transferor (the power retailer B)) holds the right (step S2701). As a result of the determination, the smart contract SC proceeds to the processing in step S2702 when the divider holds a right (step S2701: Yes), or proceeds to the processing in step S2703 when the divider does not hold the right (step S2701: No).

In step S2702, the smart contract SC divides the right into the aggregate units. The smart contract SC creates divided instances, sets the right identifier of a supplier as the supplier, NULL as a supply destination due to an unspent state, and the divided period as the right holding period, stores the divided instances in the blockchain BC (step S2702), and ends the processing. An instance of the "supplier" performs functions equivalent to those of the UTXO node 151.

In step S2703, the smart contract SC ends this processing because there is no right of division (step S2703). In the processing example illustrated in FIG. 27, the smart contract SC creates a virtual table such as the transfer information 2600 in FIG. 26, but actually creates the UTXO node 151 illustrated in FIG. 1 and the like.

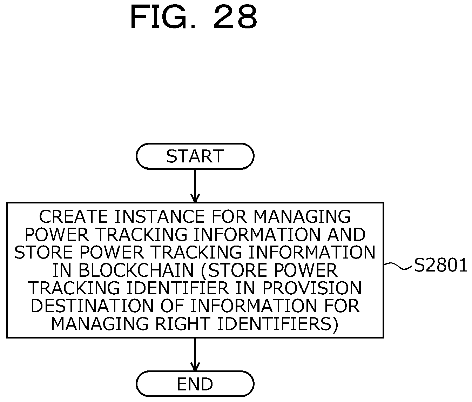

FIG. 28 is a flowchart illustrating an example of power tracking information registration processing of the smart contract. The smart contract SC creates an instance for managing the power tracking information, stores the power tracking information (power tracking record TR) in the blockchain BC (step S2801), and ends this processing. In this processing, the smart contract SC stores a power resource right identifier in a power resource of the power tracking information, and stores a power tracking identifier in a provision destination of the information for managing right identifiers.

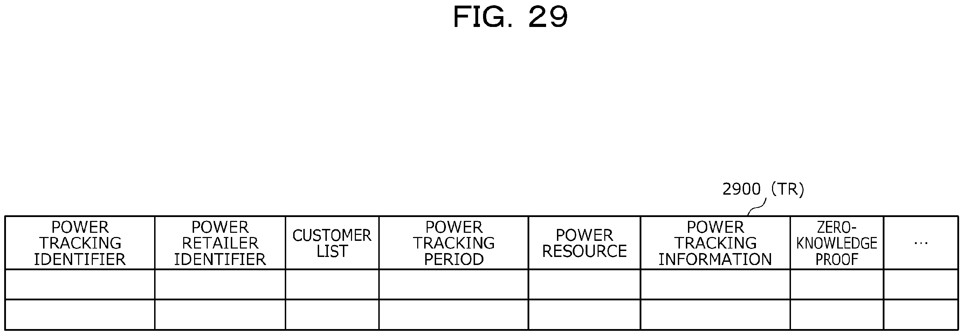

FIG. 29 is a chart illustrating an example of power tracking information stored in the blockchain. Power tracking information 2900 (power tracking record TR) created in the processing in FIG. 28 contains information on a power tracking identifier, a power retailer identifier, a customer list, a power tracking period, a power resource, power tracking information, a zero-knowledge proof, and so on.

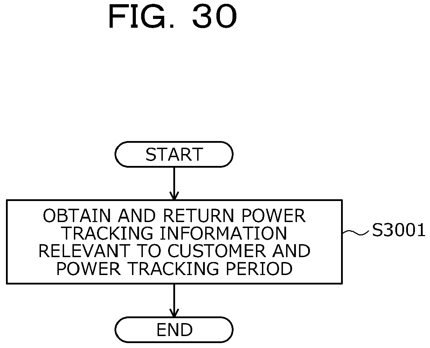

FIG. 30 is a flowchart illustrating an example of power tracking information reference processing of the smart contract. When the customer C refers to the power tracking information 2900 by using the customer system 120, the smart contract SC executes the following processing. The smart contract SC obtains the power tracking information 2900 relevant to the customer C and the power tracking period in the power tracking information 2900, returns the power tracking information to the customer system 120 (step S3001), and ends this processing.

### (Example of Power Tracking Information Output for Each Customer)

In the above-described embodiment, the zero-knowledge protocol guarantees the contents of information in a format where pieces of information on multiple customers C are compiled. For this reason, in the above-described embodiment, when a certain customer provides the information with the zero-knowledge proof ZC added to a third party, the certain customer also provides the information on the other customers.

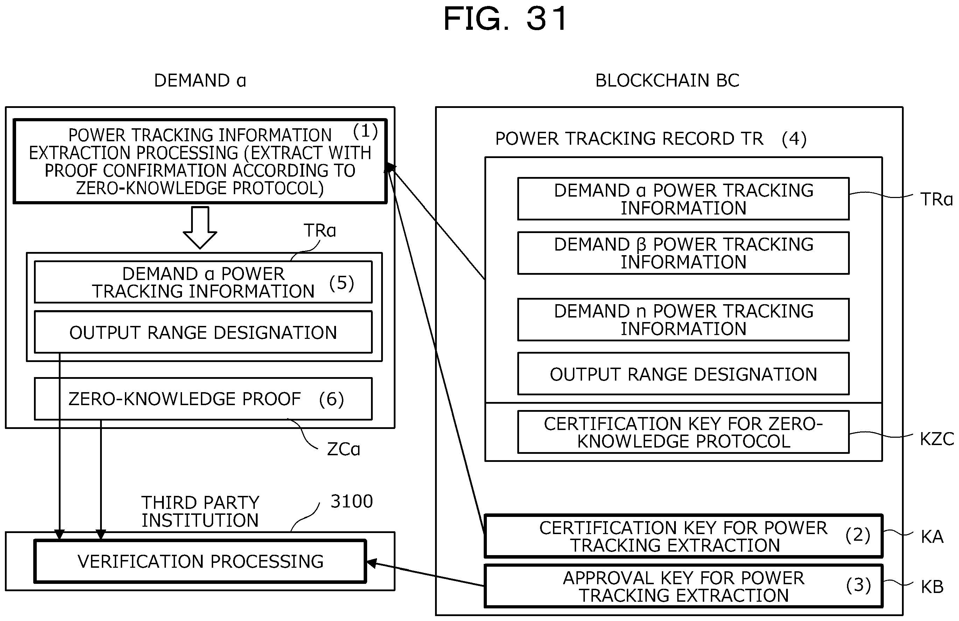

FIG. 31 is an explanatory diagram of an example of power tracking information output processing for each customer. According to the processing order of (1) to (6) in FIG. 31, a certain customer (demand α) among the multiple customers C provides only desired information. For this purpose, by separately using the zero-knowledge protocol, only the desired information is extracted from the information containing information on the other customers C (demands β to n), and a set of the extracted information and the zero-knowledge proof ZC is provided to a third party.

As preliminary preparation for the processing in FIG. 31, each of smart contracts SC is prepared which prepare areas for storing a certification key and an approval key and register and refer to these keys. For example, the smart contracts SC are prepared for 1. registration of a certification key KA for power tracking extraction, 2. reference to the certification key KA for power tracking extraction, 3. registration of an approval key KB for power tracking extraction, and 4. reference to the approval key KB for power tracking extraction.

A certification key and an authentication key for the zero-knowledge protocol are created and registered. For the zero-knowledge protocol, these keys have to be generated and shared in advance. A logic for the zero-knowledge protocol for extracting power tracking information TRa on a designated customer C (demand α) from the power tracking information is constructed, and the power tracking information TRa is stored in the blockchain BC by using the above smart contracts SC prepared by generating the keys.

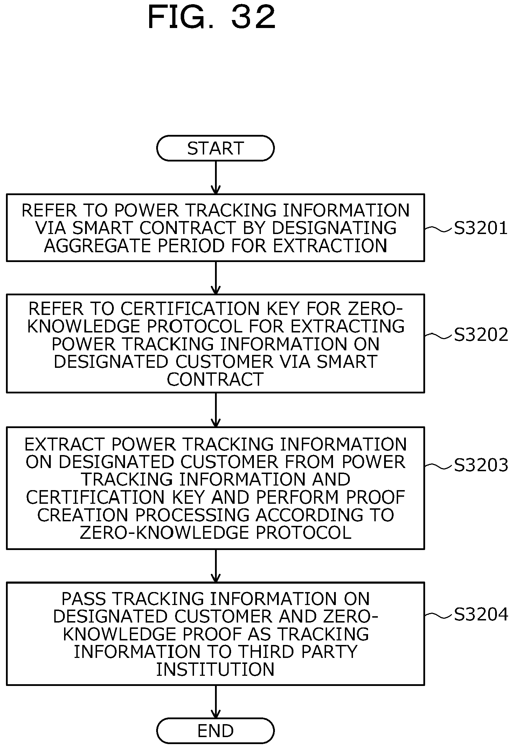

FIG. 32 is a flowchart illustrating an example of power tracking information generation processing for each customer. FIG. 32 illustrates a processing example corresponding to the description of FIG. 31. For example, the customer system 120 of a certain customer C (demand α) refers to the power tracking information 2900 via the smart contract SC by designating an aggregate period for extraction (step S3201).

Next, via the smart contract SC, the customer system 120 refers to a certification key KZC for the zero-knowledge protocol for extracting the power tracking information TRa on the designated customer C (demand α) (step S3202).

The customer system 120 extracts the power tracking information TRa in an output range of the designated customer C (demand α) from the power tracking information 2900 and the certification key KZC, and creates a proof of the zero-knowledge protocol (step S3203).

After that, the customer system 120 passes, as tracking information, the power tracking information TRa in the designated output range of the designated customer C (demand α) and the zero-knowledge proof ZCo to a third party institution 3100 (step S3204), and ends this processing.

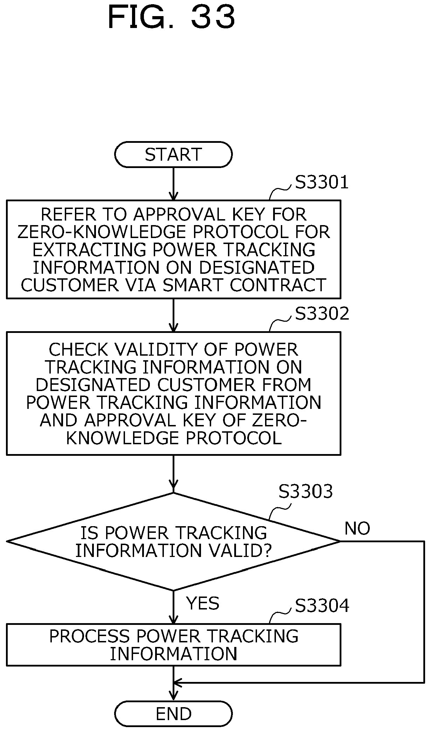

FIG. 33 is a flowchart illustrating an example of verification processing by a third party institution. The example of the verification processing will be described based on the power tracking information TRa in the designated output range of the customer C (demand α) and the zero-knowledge proof ZCa passed in step S3204 in FIG. 32. A system of the third party institution 3100 refers to the approval key KB for the zero-knowledge protocol for extracting the power tracking information TRa on the designated customer C (demand α) via the smart contract SC (step S3301).

Next, the system of the third party institution 3100 checks the validity of the power tracking information TRa on the designated customer C (demand α) based on the power tracking information TRa and the approval key KB for the zero-knowledge protocol (step S3302). When the power tracking information TRa is valid (step S3303: Yes), the system of the third party institution 3100 performs processing (approval) of confirming the validity of the power tracking information TRa (step S3304), and ends this processing. On the other hand, when the power tracking information TRa is invalid (step S3303: No), the system of the third party institution 3100 ends this processing without performing the processing (approval) on the power tracking information TRa.

The power transaction apparatus 100 of the embodiment described above stores the transaction information between the supply side and the demand side of power in the blockchain. The power transaction apparatus 100 sets, as transaction information, a supply amount obtained by dividing a power resource on a supply side by aggregate period, a demand amount of multiple customers who demand the power resource on a demand side, and surplus power that is a difference between the supply amount and the demand amount. Additionally, the validity of the transaction information may be guaranteed by the zero-knowledge protocol. In this way, the transaction information in which the power supply amount = the demand amount + the surplus power holds is stored in the blockchain BC, thereby leaving no surplus power resource, which makes it unnecessary to perform the power resource management for avoiding over-counting such as double counting.

The power transaction apparatus 100 acquires the power supply amount on the supply side and the power demand amount on the demand side per predetermined unit transaction time, and obtains the surplus power by calculating a difference between the supply amount and the demand amount of power per unit transaction time for the aggregate period. This makes it possible to equalize the supply amount and the demand amount per unit transaction time such as per 30 minutes, so that the supply amount is completely consumed by the demand without leaving any surplus power resource, and thereby to avoid over-counting such as double counting.

In a case where there are multiple power resources on the supply side, the power transaction apparatus 100 creates matching data per unit transaction time specifying which of the multiple power resources provides what supply amount to which of multiple customers. By aggregating the matching data according to the zero-knowledge protocol, the power transaction apparatus 100 creates power tracking information obtained as a result of the aggregation and the zero-knowledge proof as transaction information, and stores the transaction information in the blockchain. Accordingly, in a case where there are multiple resources on the supply side, it is possible to perform tracking identifying which of the resources on the supply side generated power received on the demand side.

The power transaction apparatus 100 performs the processing of dividing the power resource on the supply side by aggregate period by inputting the power resource for the power transaction contract period to the UTXO node on the blockchain via the smart contract. This makes it possible to obtain the output of the power resources divided by aggregate period. As described above, by using the UTXO node on the blockchain, the power resource may be easily divided by aggregate period such as one month.

In referring to the transaction information on a specific customer, the power transaction apparatus 100 extracts the transaction information on the specific customer by using the certification key via the smart contract according to the zero-knowledge protocol using the power tracking information for each of the multiple customers included in the transaction information stored on the blockchain and the certification key and the approval key for transaction information extraction generated and stored in advance. By providing the extracted transaction information and the zero-knowledge proof to a third party, the power transaction apparatus 100 may receive verification of the transaction information using the approval key by the third party. On the blockchain, the zero-knowledge protocol guarantees the contents of information in a format where pieces of transaction information on multiple customers are compiled. For this reason, when a certain customer provides the transaction information to a third party, the certain customer also provides the transaction information on the other customers. To address this, the above-described configuration is able to extract only the transaction information on the desired customer from the transaction information according to the zero-knowledge protocol, and provide a set of the extracted transaction information and the zero-knowledge proof to the third party.

In the case of the power transaction apparatus 100, the transaction information stored in the blockchain contains a resale destination of the surplus power on a per-aggregate period basis. This enables, for example, a power retailer to resell the surplus power for the aggregate period as a renewable energy value, and makes it possible to clearly specify a sale destination of the surplus power in the resale on the blockchain and thereby avoid double counting.

The power transaction apparatus 100 at a power retailer that receives transfers of power resources is able to execute the above-described processing based on the respective power contracts between power stations on a supply side and customers on a demand side. Accordingly, the power retailer is enabled to treat the power resources from the power stations as its own resources, and perform power transactions with the consumers based on the power contracts for power supply.

From the above, according to the embodiment, the power transaction apparatus 100 is able to, instead of recording the transaction information on the supply-demand relationship of the power resources per unit transaction time of 30 minutes, aggregate the transaction information to reduce the information amount, and verify whether or not over-counting of the resources, for example, a transaction of delivering power more than the power generation amount to the customer is performed.

In the related art, a remainder of a power resource allocated to each of the customers is utilized as a next power resource. To avoid double counting, power resource information has to be managed by a UTXO node extended in two dimensions. Thus, there is a scale problem that the power resource information has to be excluded from an aggregation target and increases the amount of data. In contrast, in the embodiment, instead of preparing and processing a power resource for each customer, multiple customers and power resources are collectively aggregated for an aggregate period, while the power resources are completely consumed for each unit transaction time of 30 minutes. By completely consuming the power resources, it is also possible to aggregate the information for avoiding double counting. As a result, it is possible to cut all pieces of information per unit transaction time of 30 minutes, which may cause a scale problem in using a blockchain. Thus, a scale problem that may occur in the related art by handling pieces of information per unit transaction time of 30 minutes, for example, does not occur.

The power transaction method described in the embodiment of the present disclosure may be implemented by causing a processor such as a server to execute a previously prepared program. The program of this method may be recorded on a computer-readable recording medium such as a hard disk, a flexible disk, a compact disc read-only memory (CD-ROM), a Digital Versatile Disk (DVD), or a flash memory, is read from the recording medium by the computer, and is executed by the computer. The program of this method may be distributed via a network such as the Internet.

## Claims

1. A power transaction program comprising instructions which, when executed by a computer, cause the computer to execute processing of storing, in a blockchain, transaction information between a supply side and a demand side of power, the processing comprising:
determining a supply amount by dividing a power resource on the supply side by aggregate period;
determining a demand amount of a plurality of customers who demand the power resource on the demand side;
determining a surplus power that is a difference between the supply amount and the demand amount;
generating, by using zero-knowledge protocol, the transaction information based on the supply amount, the demand amount, to store generated transaction information in the blockchain.

2. The power transaction program according to claim 1, wherein
the determining of the supply amount and the determining of the demand amount are performed per predetermined unit transaction time,
the determining of the surplus power includes obtaining the surplus power by calculating a difference between the supply amount and the demand amount of power per unit transaction time for the aggregate period.

3. The power transaction program according to claim 2, wherein
there are a plurality of power resources on the supply side, and
the processing further comprises
creating matching data per the predetermined unit transaction time, the matching data indicating which of the plurality of power resources provides what supply amount to which of the plurality of customers, and
generating the transaction information by using a zero-knowledge proof and power tracking information obtained as a result of aggregating the matching data according to the zero-knowledge protocol, to store the generated transaction information in the blockchain.

4. The power transaction program according to claim 1, wherein
the dividing the power resource on the supply side by aggregate period includes:
inputting the power resource for a contract period of a power transaction to an unspent transaction output (UTXO) node of the blockchain via a smart contract, thereby obtaining an output of the power resources divided by aggregate period.

5. The power transaction program according to claim 1, wherein
in referring to the transaction information on a specific customer, the processing further comprises
according to zero-knowledge protocol using the power tracking information for each of the plurality of customers included in the transaction information stored on the blockchain and a certification key and an approval key for transaction information extraction generated and stored in advance, extracting the transaction information on the specific customer by using the certification key via a smart contract,
providing the extracted transaction information and a zero-knowledge proof to a third party, and
receiving verification of the transaction information by the third party using the approval key.

6. The power transaction program according to any one of claims 1 to 5, wherein
the computer caused by the program to cause the processing is a power transaction apparatus of a power retailer that receives a transfer of the power resource to execute the process based on respective power contracts with a power station on the supply side and a customer on the demand side.

7. A power transaction method implemented by a computer of storing, in a blockchain, transaction information between a supply side and a demand side of power, the method comprising:
determining a supply amount by dividing a power resource on the supply side by aggregate period;
determining a demand amount of a plurality of customers who demand the power resource on the demand side;
determining a surplus power that is a difference between the supply amount and the demand amount;
generating, by using zero-knowledge protocol, the transaction information based on the supply amount, the demand amount, to store generated transaction information in the blockchain.

8. A power transaction apparatus of storing transaction information between a supply side and a demand side of power in a blockchain, the power transaction apparatus comprising a control unit configured to perform processing including:
determining a supply amount by dividing a power resource on the supply side by aggregate period;
determining a demand amount of a plurality of customers who demand the power resource on the demand side;
determining a surplus power that is a difference between the supply amount and the demand amount;
generating, by using zero-knowledge protocol, the transaction information based on the supply amount, the demand amount, to store generated transaction information in the blockchain.
